# EUROPÄISCHE PATENTSCHRIFT

(11) **EP 3 158 305 B1**
(45) Veröffentlichungstag und Bekanntmachung des Hinweises auf die Patenterteilung: **27.11.2019**
(21) Anmeldenummer: 15726989.5
(22) Anmeldetag: 08.06.2015
(51) Int. Cl.: G01L 9/00, G01L 13/02

(54) **KAPAZITIVER DIFFERENZDRUCKSENSOR UND VERFAHREN ZU SEINER HERSTELLUNG**
CAPACITIVE DIFFERENTIAL PRESSURE SENSOR AND METHOD FOR THE PRODUCTION THEREOF
CAPTEUR DE PRESSION DIFFÉRENTIELLE CAPACITIF ET SON PROCÉDÉ DE FABRICATION

(30) Priorität: 23.06.2014 DE 102014108748
(43) Veröffentlichungstag der Anmeldung: 26.04.2017
(73) Patentinhaber: Endress+Hauser SE+Co. KG, 79689 Maulburg (DE)
(72) Erfinder: TEIPEN, Rafael, 10407 Berlin (DE); LEMKE, Benjamin, 12051 Berlin (DE)
(74) Vertreter: Andres, Angelika Maria
(86) Internationale Anmeldenummer: PCT/EP2015/062679
(87) Internationale Veröffentlichungsnummer: WO 2015/197344

(56) Entgegenhaltungen:
- EP-A2- 1 271 121
- EP-A2- 1 555 517
- EP-A2- 1 860 417
- DE-A1- 3 827 138

## Beschreibung

Die vorliegende Erfindung betrifft einen kapazitiven Differenzdrucksensor, ein Verfahren zu seinem Betrieb und ein Verfahren zu seiner Herstellung. Die Erfindung ist durch die Ansprüche definiert.

Differenzdrucksensoren werden in der industriellen Messtechnik zur Messung von durch eine Druckdifferenz zwischen einem ersten und einem zweiten auf den Differenzdrucksensor einwirkenden Druck gegebenen Differenzdrücken eingesetzt. Als Differenzdrucksensoren werden z.B. als Halbleitersensoren oder Sensor-Chips bezeichnete Differenzdrucksensoren eingesetzt, die unter Verwendung von aus der Halbleitertechnologie bekannten Prozessen kostengünstig im Waferverband hergestellt werden können.

Diese Differenzdrucksensoren weisen üblicher Weise eine zwischen zwei Grundkörpern angeordnete Messmembran auf. In jedem der beiden Grundkörper ist unter der Messmembran jeweils eine Druckkammer eingeschlossen. Im Messbetrieb wird die erste Seite der Messmembran über eine Ausnehmung im ersten Grundkörper mit dem ersten und
die zweite Seite der Messmembran über eine Ausnehmung im zweiten Grundkörper mit dem zweiten Druck beaufschlagt.

Bei kapazitiven Differenzdrucksensoren wird die resultierende von der Differenz der beiden Drücke abhängige Auslenkung der Messmembran
mittels eines kapazitiven elektromechanischen Wandlers erfasst, und in ein den zu messenden Differenzdruck wiedergebendes elektrisches Signal umgewandelt. Halbleitersensoren weisen regelmäßig Messmembranen aus Silizium auf, die aufgrund deren Leitfähigkeit unmittelbar als Elektrode des kapazitiven Wandlers eingesetzt werden können. Zusätzlich umfassen die kapazitiven Wandler mindestens eine, in einem der beiden Grundkörper integrierte und elektrische gegenüber der Messmembran isolierte, starre Gegenelektrode, die zusammen mit der als Elektrode dienenden Messmembran einen Kondensator bildet. Die Kapazitäten dieser Kondensatoren sind abhängig von der Durchbiegung der Messmembran, die wiederum vom zu messenden Differenzdruck abhängig ist.

Grundsätzlich wäre es möglich, Differenzdrucksensoren mit einteiligen, die Gegenelektroden bildenden Grundkörpern auszustatten, zwischen denen eine als Messmembran und zugleich als Elektrode dienende Siliziumscheibe angeordnet ist. Hierzu ist zwischen der Siliziumscheibe und jeder der beiden Gegenelektroden jeweils eine isolierende Schicht vorzusehen, über die ein äußerer Rand der Siliziumscheibe unter Einschluss der Druckkammer mit dem äußeren Rand der jeweiligen Gegenelektrode verbunden ist.

Vom Einsatz derartiger Differenzdrucksensoren wird in der DE 38 27 138 A1 abgeraten, da bei diesen Differenzdrucksensoren das in der DE 38 27 138 A1 im Detail beschriebene Problem besteht, dass jeder der beiden durch die Siliziumscheibe und einen der beiden einteiligen Grundkörper gebildeten Kondensatoren aus einem inneren und einem diesen außenseitlich umschließenden äußeren Teilkondensator zusammen gesetzt ist. Der innere Teilkondensator befindet sich in dem Bereich des Differenzdrucksensors, in dem der zentrale Bereich der Siliziumscheibe die vom Differenzdruck abhängige Durchbiegung erfährt. Der äußere Teilkondensator befindet sich in dem Bereich des Differenzdrucksensors, in dem der äußere den zentrale Bereich allseitig umschießende Rand der Siliziumscheibe zwischen den isolierenden Schichten angeordnet ist.

Die Kapazität C1, C2 jedes der beiden Kondensatoren entspricht der Summe der Kapazitäten C1a, C1b bzw. C2a, C2b der beiden Teilkondensatoren, aus denen er besteht. Dabei weist jedoch nur die Kapazität C1a bzw. C2a des inneren Teilkondensators die messtechnisch zu erfassende Differenzdruckabhängigkeit auf. Das hat zur Folge, dass die messtechnisch zu erfassende von der differenzdruckabhängigen Durchbiegung des inneren Bereichs der Siliziumscheibe abhängige Kapazitätsänderung ΔC1a bzw. ΔC2a klein ist im Vergleich zu der, durch die Summe der Teilkapazitäten gegebenen, gemessenen Kapazität C1 = C1a + C1b bzw. C2 = C2a + C2b. Entsprechend ist die hierdurch erzielbare Messgenauigkeit sehr gering.

Auch weist die in der DE 38 27 138 A1 beschriebene, in der Druckmesstechnik zur Ermittlung des Differenzdruck herangezogene, differentiellen Änderung f der beiden Kapazitäten C1, C2, die anhand des Verhältnisses der Differenz C1 - C2 der beiden Kapazitäten zu deren Summe C1 + C2 gemäß: f = (C1-C2)/C1+C2) bestimmt wird, nicht die gewünschte lineare Abhängigkeit vom zu messenden Differenzdruck auf.

Diese Nachteile sind insb. bei Differenzdrucksensoren mit quadratischer Grundfläche besonders ausgeprägt, da die für die Kapazität C1b, C2b der äußeren Teilkondensatoren maßgebliche Elektrodenfläche bei Siliziumscheiben und Gegenelektroden mit entsprechend quadratischer Grundfläche besonders groß sind. Im Waferverband herstellbare Halbleitersensoren weisen jedoch regelmäßig quadratische Grundflächen auf, da quadratische Grundflächen es ermöglichen die im Waferband hergestellten Differenzdrucksensoren durch Sägen entlang gerader Sägelinien zu vereinzeln.

Dieses Problem wird im Stand der Technik auf die, z.B. in der DE 38 27 138 A1 und in der DE 103 93 943 B3 beschriebene Weise dadurch gelöst, dass zu beiden Seiten der die Messmembran bildenden Siliziumscheibe Grundkörper eingesetzt werden, die aus drei aufeinander angeordneten Schichten aufgebaut sind. Diese Grundkörper weisen jeweils eine der Siliziumscheibe zugewandte und eine von der Siliziumscheibe abgewandte leitfähige Schicht auf, die durch eine zwischen den beiden leitfähigen Schichten angeordnete Isolierschicht voneinander getrennt sind. In der der Siliziumscheibe zugewandten leitfähigen Schicht ist jeweils mindestens ein bis zur Isolierschicht führender zu einem Ring geschlossener Graben vorgesehen, durch den die Schicht in einen vom Graben umschlossenen als Gegenelektrode dienenden Bereich, und einen den Graben außenseitlich umschließenden die Siliziumscheibe tragenden äußeren Bereich unterteilt ist. Dabei ist der innere Bereich derart zu strukturieren, dass er von der Siliziumscheibe beabstandet ist.

Die Herstellung derartiger Differenzdrucksensoren ist jedoch vergleichsweise aufwendig, da jeder Grundkörper aus mehreren Schichten aufgebaut, und die einzelnen Schichten entsprechend strukturiert, und miteinander verbunden werden müssen. Darüber hinaus müssen die in den Grundkörpern eingeschlossenen Gegenelektroden durch die äußeren Schicht und die Isolierschicht des jeweiligen Grundkörpers hindurch elektrisch kontaktiert werden.

Die Patentanmeldung EP1271121 offenbart einen kapazitiven Drucksensor, mit einer leitfähigen Scheibe, die gegenüber einer Gegenelektrode angeordnet ist. Die leitfähige Scheibe wird durch einen Graben in einen als Elektrode dienenden inneren Bereich und einen davon durch den Graben elektrisch isolierten äußeren Bereich unterteilt. Der innere Bereich bildet mit der Gegenelektrode einen Kondensator mit einer von einem auf die Messmembran einwirkenden Druck abhängigen Kapazität, wobei der Kondensator aus einem inneren Teilkondensator und einem den inneren Teilkondensator außenseitlich umgebenden äußeren Teilkondensator besteht, und wobei die Fläche des Grabens und die Fläche des gesamten äußeren Bereichs der Scheibe aufgrund des Grabens nicht zur Kondensatorfläche des äußeren Teilkondensators beitragen.

Es ist eine Aufgabe der vorliegenden Erfindung, einen einfach aufgebauten und kostengünstig herstellbaren Differenzdrucksensor, sowie ein Verfahren zu dessen Herstellung anzugeben.

Hierzu umfasst die Erfindung einen Differenzdrucksensor, mit
- einer ersten und einer zweiten Gegenelektrode,
- einer zwischen den beiden Gegenelektroden angeordneten leitfähigen Scheibe,
- einer ersten isolierenden Schicht, über die ein äußerer Rand der Scheibe unter Bildung einer ersten Druckkammer mit einem äußeren Rand der ersten Gegenelektrode verbunden ist,
- einer zweiten isolierenden Schicht, über die ein äußerer Rand der Scheibe unter Bildung einer zweiten Druckkammer mit einem äußeren Rand zweiten Gegenelektrode verbunden ist,
- einer in der ersten Gegenelektrode vorgesehenen Ausnehmung, über die die erste Druckkammer mit einem ersten Druck beaufschlagbar ist, und
- einer in der zweiten Gegenelektrode vorgesehenen Ausnehmung, über die die zweite Druckkammer mit einem zweiten Druck beaufschlagbar ist, der sich dadurch auszeichnet, dass
- die Scheibe durch einen Graben in einen als Elektrode dienenden inneren Bereich und einen davon durch den Graben elektrisch isolierten äußeren Bereich unterteilt ist,
- der inneren Bereich eine zwischen den beiden Druckkammern angeordnete Messmembran und einen die Messmembran umgebenden, zwischen den inneren Rändern der beiden isolierenden Schichten eingespannten Randbereich umfasst, und
- der innere Bereich mit jeder der Gegenelektroden jeweils einen Kondensator mit einer von einem auf die Messmembran einwirkenden Differenzdruck zwischen dem ersten und dem zweiten Druck abhängigen Kapazität bildet, wobei die Kondensatoren jeweils aus einem inneren Teilkondensator, dessen Kondensatorflächen der Fläche des Messmembran entsprechen, und einem den inneren Teilkondensator außenseitlich umgebenden äußeren Teilkondensator bestehen, und wobei die Fläche des Grabens und die Fläche des gesamten äußeren Bereichs der Scheibe aufgrund des Grabens nicht zur Kondensatorfläche der äußeren Teilkondensatoren beitragen.

Gemäß einer ersten Weiterbildung umfasst der innere Bereich einen sich zum Rand der Scheibe erstreckenden, insb. stegförmigen, Anschlussbereich.

Eine Weiterbildung der ersten Weiterbildung zeichnet sich dadurch aus, dass
- die zwischen der Scheibe und der zweiten Gegenelektrode angeordnete isolierende Schicht eine zumindest einen Teilbereich des Anschlussbereichs frei legende Aussparung aufweist,
- die zweite Gegenelektrode eine in der Aussparung der isolierenden Schicht mündende Aussparung aufweist, und
- ein elektrischer Anschluss des als Elektrode dienenden inneren Bereichs durch die Aussparung in der Gegenelektrode und die Aussparung in der zweiten isolierenden Schicht hindurch erfolgt.

Gemäß einer Ausgestaltung der letztgenannten Weiterbildung erfolgt der Anschluss des inneren Bereichs über eine Leiterbahn, insb. eine durch Aufsputtern einer Metallisierung aufgebrachte Leiterbahn, die vom Anschlussbereich entlang einer Mantelfläche der zweiten isolierenden Schicht und einer Mantelfläche der zweiten Gegenelektrode zu einer von der Scheibe abgewandte Rückseite der zweiten Gegenelektrode verläuft, wobei zwischen der Leiterbahn und den Oberflächen der zweiten Gegenelektrode, auf denen die Leiterbahn verläuft, eine Isolationsschicht vorgesehen ist.

Gemäß einer bevorzugten Ausgestaltung weist der Graben eine Grabenbreite größer gleich 5 µm auf. Vorzugsweise weist der Graben eine Grabenbreite auf, die größer gleich einem Viertel einer Dicke der Scheibe ist.

Gemäß einer weiteren bevorzugten Ausgestaltung weist der zwischen den inneren Rändern der beiden isolierenden Schichten eingespannte Randbereich des inneren Bereichs eine Breite auf, die größer gleich 500 µm ist.

Gemäß einer weiteren Ausgestaltung ist auf der ersten und der zweiten Gegenelektrode jeweils ein Anschluss aufgebracht, insb. als Metallisierung aufgesputtert, über den die jeweilige Gegenelektrode elektrisch anschließbar ist.

Eine bevorzugte Ausführung des erfindungsgemäßen Differenzdrucksensors zeichnet sich dadurch aus, dass
- die erste und die zweite Gegenelektrode einteilig sind, und insb. aus Silizium bestehen,
- die Scheibe eine Siliziumscheibe, insb. eine aus einer Deckschicht eines SOI-Wafers gefertigte Siliziumscheibe, ist, und
- die erste und die zweite isolierende Schicht jeweils eine Siliziumoxidschicht ist.

Weiter umfasst die Erfindung ein Verfahren zum Betrieb eines erfindungsgemäßen Differenzdrucksensors, das sich dadurch auszeichnet, dass
- anhand einer Kapazität des durch den als Elektrode dienenden inneren Bereich der Scheibe und die erste Gegenelektrode gebildeten ersten Kondensators und/oder des durch den als Elektrode dienenden inneren Bereich der Scheibe und die zweite Gegenelektrode gebildeten zweiten Kondensators der auf die Messmembran einwirkende Differenzdruck bestimmt wird, und/oder
- anhand einer Kapaziät eines durch die erste und die zweite Gegenelektrode gebildeten Kondensators ein Maß für einen auf beide Seiten des Differenzdrucksensors gleichermaßen einwirkenden Systemdruck bestimmt wird.

Weiter umfasst die Erfindung ein Verfahren zur Herstellung eines erfindungsgemäßen Differenzdrucksensors, insb. ein im Waferband zur parallelen Herstellung mehrerer baugleicher Differenzdrucksensoren ausführbares Verfahren, das sich dadurch auszeichnet, dass
- der Graben in eine die Scheibe bildendende Deckschicht eines SOI-Wafers eingebracht, insb. durch reaktives Ionentiefenätzen eingeätzt, wird,
- aus einer auf einer Trägerschicht eines ersten Siliziumwafers aufgebrachten Isolationssicht die erste isolierende Schicht gefertigt wird, wobei ein außenseitlich von einem verbleibenden, die erste isolierende Schicht bildenden Rand der Isolationssicht umgebener Bereich der Isolationssicht entfernt, insb. durch ein mit gepufferter Flusssäure ausgeführtes Ätzverfahren weggeätzt, wird,
- die erste Gegenelektrode aus der Trägerschicht des ersten Siliziumwafers gefertigt wird, indem eine die Ausnehmung der ersten Gegenelektrode bildende Grube in die Trägerschicht eingebracht, insb. mittels reaktivem Ionentiefenätzen oder einem mit Kaliumhydroxid ausgeführten Ätzverfahren eingeätzt, wird,
- die Isolationsschicht des ersten Siliziumwafers derart mit der Deckschicht des SOI-Wafers verbunden, insb. mittels Silizium-Fusions Bonden verbunden, wird, dass sich die Ausnehmung der ersten Gegenelektrode über der Messmembran befindet,
- die Deckschicht des SOI-Wafers frei gelegt wird, in dem die Trägerschicht des SOI-Wafers entfernt, insb. mittels reaktivem Ionentiefenätzen oder einem mit Kaliumhydroxid ausgeführten Ätzverfahren weggeätzt, und eine dadurch freigelegte Isolationsschicht des SOI-Wafers entfernt, insb. durch ein mit gepufferter Flusssäure ausgeführtes Ätzverfahren, durch ein reaktives lonenätzverfahren oder durch ein reaktives lonentiefenätzverfahren weggeätzt, wird,
- aus einer auf einer Trägerschicht eines zweiten Siliziumwafers aufgebrachten Isolationssicht die zweite isolierende Schicht gefertigt wird, wobei ein außenseitlich von einem verbleibenden, die zweite isolierende Schicht bildenden Rand der Isolationssicht umgebener Bereich der Isolationssicht entfernt, insb. durch ein mit gepufferter Flusssäure ausgeführtes Ätzverfahren weggeätzt, wird,
- die zweite Gegenelektrode aus der Trägerschicht des zweiten Siliziumwafers gefertigt wird, indem eine die Ausnehmung der zweiten Gegenelektrode bildende Grube in die Trägerschicht eingebracht, insb. mittels reaktivem Ionentiefenätzen oder einem mit Kaliumhydroxid ausgeführten Ätzverfahren eingeätzt, wird, und
- der zweite Siliziumwafer derart mit der mit dem ersten Siliziumwafer verbundenen Deckschicht des SOI-Wafers verbunden, insb. durch Silizium-Fusions Bonden verbunden, wird, dass die sich die Aussparungen der beiden Gegenelektroden zu beiden Seiten der Messmembran gegenüberliegen.

Eine Ausgestaltung dieses Verfahrens zeichnet sich dadurch aus, dass
- der innere Bereich den sich zum Rand der Scheibe erstreckenden Anschlussbereich umfasst,
- bei der Fertigung der zweiten isolierenden Schicht eine zumindest einen Teilbereich des Anschlussbereichs freilegende Aussparung in der isolierenden Schicht erzeugt wird, und
- bei der Fertigung der zweiten Gegenelektrode eine in der Aussparung in der isolierenden Schicht mündende Aussparung in der zweiten Gegenelektrode erzeugt wird.

Eine Weiterbildung der erfindungsgemäßen Verfahren zeichnet sich dadurch aus, dass mehrere baugleiche Differenzdrucksensoren parallel im Waferverband gefertigt werden, wobei die Differenzdrucksensoren paarweise derart nebeneinander gefertigt werden, dass
- die Anschlussbereiche der beiden Differenzdrucksensoren jeden Paares aneinander angrenzen,
- die Differenzdrucksensoren spiegelsymmetrisch zu einer zwischen den Anschlussbereichen der Paare verlaufenden Trennlinie aufgebaut werden, entlang derer der Waferverband beim abschließenden Vereinzeln der Differenzdrucksensoren getrennt wird,
- die aneinander angrenzenden Aussparungen in den zweiten isolierenden Schichten jeden Paares durch die Entfernung eines einzigen zusammenhängenden Bereichs der Isolationsschicht des zweiten Siliziumwafers erzeugt werden, und
- die aneinander angrenzenden Aussparungen in den zweiten Gegenelektroden jeden Paares durch das Einbringen einer einzigen Grube in die Trägerschicht des zweiten Siliziumwafers erzeugt werden.

Der erfindungsgemäße Differenzdrucksensor weist den Vorteil auf, dass der als Elektrode dienende innere Bereich der leitfähigen Scheibe durch den Graben vom äußeren Bereich der Scheibe abgetrennt ist. Hierdurch wird der Anteil der sich in Abhängigkeit vom Differenzdruck verändernden Teilkapazität an der gemessenen Gesamtkapazität, der durch die Elektrode und jeweils eine der Gegenelektroden gebildeten beiden Kondensatoren deutlich vergrößert. Dadurch wird erreicht, dass der Differenzdrucksensor eine deutlich höhere Messgenauigkeit aufweist, als Differenzdrucksensoren, bei denen die gesamte Schicht als Elektrode eingesetzt wird.

Darüber hinaus ist der erfindungsgemäße Differenzdrucksensor aufgrund der einteiligen unmittelbar als Gegenelektroden dienenden Grundkörper, sehr einfach aufgebaut und kostengünstig herstellbar.

Da die Größe der Grundfläche des äußeren Bereichs aufgrund des Grabens keinen Einfluss auf die Messgenauigkeit hat, ist die Geometrie der Grundfläche des Differenzdrucksensors nahezu frei wählbar, und kann somit zur Ausnutzung der damit bei der Herstellung im Waferverband verbundenen Vorteile quadratisch sein.

Die Erfindung und deren Vorteile werden nun anhand der Figuren der Zeichnung, in denen ein Ausführungsbeispiel dargestellt ist, näher erläutert. Gleiche Elemente sind in den Figuren mit den gleichen Bezugszeichen versehen.
- Fig. 1: zeigt: einen erfindungsgemäßen Differenzdrucksensor;
- Fig. 2: zeigt: Draufsichten auf die einzelnen Schichten des Differenzdrucksensors von Fig. 1;
- Fig. 3: zeigt: Verfahrensschritte a) - g) zur Herstellung des Differenzdrucksensors von Fig. 1; und
- Fig. 4: zeigt: eine Draufsicht auf die Deckschicht des in Verfahrensschritt a) von Fig. 3 gezeigten SOI-Wafers.

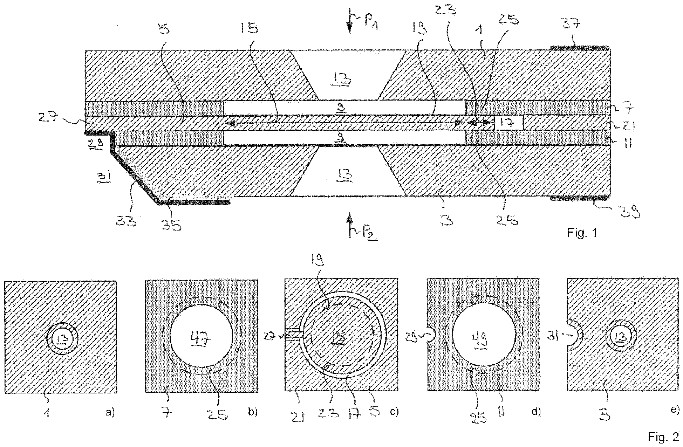

Fig. 1 zeigt ein Ausführungsbeispiel eines erfindungsgemäßen Differenzdrucksensors. Fig. 2 zeigt Draufsichten auf die einzelnen Schichten, aus denen der Differenzdrucksensor von Fig. 1 aufgebaut ist. Der Differenzdrucksensor umfasst eine zwischen einer ersten und einer zweiten Gegenelektrode 1, 3 angeordnete Scheibe 5. Die Scheibe 5 und die Gegenelektroden 1, 3 bestehen aus einem elektrisch leitfähigen Material, vorzugsweise aus kristallinem Silizium. Die Gegenelektroden 1, 3 sind im Wesentlichen scheibenförmig, und weisen eine deutlich größere Dicke auf als die Scheibe 5. Die Dicke der Scheibe 5 wird in Abhängigkeit vom Messbereich des Differenzdrucksensors vorgegeben, und liegt typischer Weise in der Größenordnung von einigen 10 µm, z.B. in einem Bereich von 20 µm bis 100 µm. Im Vergleich dazu weisen die Gegenelektroden 1, 3 eine Dicke in der Größenordnung von einigen Hundert Mikrometern, z.B. 300 µm, auf.

Zwischen der Scheibe 5 und der ersten Gegenelektrode 1 ist eine erste isolierende Schicht 7, vorzugsweise eine Siliziumoxid-Schicht, vorgesehen, über die ein äußerer Rand einer der ersten Gegenelektrode 1 zugewandten ersten Seite der Scheibe 5 unter Bildung einer zwischen der ersten Gegenelektrode 1 und der Scheibe 5 eingeschlossenen ersten Druckkammer 9 mit einem äußeren Rand der der Scheibe 5 zugewandten Stirnseite der ersten Gegenelektrode 1 druckdicht verbunden ist.

Zwischen der Scheibe 5 und der zweiten Gegenelektrode 3 ist eine zweite isolierende Schicht 11, vorzugsweise eine Siliziumoxid-Schicht, vorgesehen, über die ein äußerer Rand einer der zweiten Gegenelektrode 3 zugewandten zweiten Seite der Scheibe 5 unter Bildung einer zwischen der zweiten Gegenelektrode 3 und der Scheibe 5 eingeschlossenen zweiten Druckkammer 9 mit einem äußeren Rand der der Scheibe 5 zugewandten Stirnseite der zweiten Gegenelektrode 3 druckdicht verbunden ist.

In der ersten Gegenelektrode 1 ist eine durch die erste Gegenelektrode 1 hindurch verlaufende, in der ersten Druckkammer 9 mündende Ausnehmung 13 vorgesehen, über die die erste Druckkammer 9 mit einem ersten Druck p₁ beaufschlagbar ist. In der zweiten Gegenelektrode 3 ist eine durch die zweite Gegenelektrode 3 hindurch verlaufende, in der zweiten Druckkammer 9 mündende, vorzugsweise formgleiche Ausnehmung 13 vorgesehen, über die zweite Druckkammer 9 mit einem zweiten Druck p₂ beaufschlagbar ist.

Der zwischen den beiden Druckkammern 9 befindliche, vorzugsweise kreisförmige Bereich der Scheibe 5 bildet eine Messmembran 15, auf deren der ersten Gegenelektrode 1 zugewandten ersten Seite der erste Druck p₁, und auf deren der zweiten Gegenelektrode 3 zugewandten zweiten Seite der zweite Druck p₂ einwirkt. Der die Messmembran 15 bildende Bereich ist in Bild c) von Fig. 2 durch einen gestrichelt eingezeichneten Kreis kenntlich gemacht. Die Messmembran 15 weist beispielsweise einen Durchmesser von 2 mm bis 3 mm auf. Entsprechend weisen die isolierenden Schichten 7, 11 in deren Mitte jeweils eine die Messmembran 15 frei legende, die jeweilige Druckkammer 9 bildende kreisscheibenförmige Ausnehmung auf. Der auf die Messmembran 15 einwirkende, durch die Differenz des ersten und des zweiten Drucks p₁, p₂ gegebene Differenzdruck Δp bewirkt eine vom zu messenden Differenzdruck Δp abhängige Auslenkung der Messmembran 15.

Erfindungsgemäß ist die Scheibe 5 durch einen Graben 17 in einen inneren Bereich 19 und einen den inneren Bereich 19 umgebenden äußeren Bereich 21 unterteilt. Der innere und der äußere Bereich 19, 21 sind durch den Graben 17 gegeneinander elektrisch isoliert. Dabei ist eine Grabenbreite in der Größenordnung von 5 µm bis 10 µm bereits ausreichend, um eine ausreichende elektrische Isolation der beiden Bereiche 19, 21 gegeneinander zu gewährleisten. Vorzugweise ist die Grabenbreite größer gleich einem Viertel der Dicke der Scheibe 5.

Der innere Bereich 19 umfasst die frei liegende Messmembran 15 und einen an die Messmembran 15 angrenzenden, die Messmembran 15 außenseitlich allseitig umschließenden schmalen Randbereich 23. Die die Druckkammern 9 bildenden Ausnehmungen in den beiden isolierenden Schichten 7, 11 sind derart bemessen, dass die an die Ausnehmungen angrenzenden inneren Ränder 25 der isolierenden Schichten 7, 11 den Graben 17 und den Randbereich 23 des inneren Bereichs 19 der Scheibe 5 überdecken. Der Randbereich 23 ist zwischen den inneren Rändern 25 der beiden isolierenden Schichten 7, 11 eingespannt. Dabei genügt es bereits, wenn der in axialer Richtung - also parallel zur Flächennormalen auf die Messmembran 15 - zwischen den inneren Rändern 25 eingespannte Randbereich 23 in radialer Richtung eine - in Fig. 1 durch einen Doppelpfeil gekennzeichnete - Breite von größer gleich 500 µm aufweist, um eine ausreichend stabile außenseitliche Einspannung zu bewirken.

Der innere Bereich 19 dient als Elektrode, die mit jeder der beiden Gegenelektroden 1, 3 jeweils einen Kondensator bildet, dessen Kapazität C1 bzw. C3 sich in Abhängigkeit von der vom Differenzdruck Δp abhängigen Durchbiegung der Messmembran 15 verändert.

Vorzugsweise umfasst der inneren Bereich 19 einen Anschlussbereich 27 der sich von der Messmembran 15 bis zu einem äußeren Rand der Scheibe 5 erstreckt. Der Anschlussbereich 27 ist vorzugsweise als schmaler Steg ausgebildet, zu dessen beiden Längsseiten der Graben 17 verläuft. Die der ersten Gegenelektrode 1 zugewandte Oberseite des Anschlussbereichs 27 ist von der ersten isolierenden Schicht 7 überdeckt. Die auf der Unterseite des Anschlussbereichs 27 zwischen der Scheibe 5 und der zweiten Gegenelektrode 3 angeordnete zweite isolierende Schicht 11 weist außenseitlich eine Aussparung 29 auf, durch hindurch zumindest ein Teilbereich des Anschlussbereichs 27 frei gelegt ist. Entsprechend weist auch die zweite Gegenelektrode 3 eine außenseitliche Aussparung 31 auf, die in der den Anschlussbereich 27 freigebenden Aussparung 29 in der zweiten isolierenden Schicht 11 mündet. Der als Elektrode dienende innere Bereich 19 der Scheibe 5 kann somit durch die Aussparungen 29, 31 in der zweiten isolierenden Schicht 11 und der zweiten Gegenelektrode 3 hindurch über die Unterseite des Anschlussbereichs 27 kontaktiert werden.

Der elektrische Anschluss der Elektrode erfolgt vorzugsweise über eine auf die frei liegende Unterseite des Anschlussbereichs 27, z.B. in Form einer Metallisierung, aufgebrachte Leiterbahn 33. Die Leiterbahn 33 führt vorzugsweise von der Unterseite des Anschlussbereiches 27 über eine Mantelfläche der Aussparung 29 in der zweiten isolierenden Schicht 11 und eine Mantelfläche der Aussparung 31 in der zweiten Gegenelektrode 3 auf die von der Scheibe 5 abgewandte Rückseite der Gegenelektrode 3. Zur elektrischen Isolation der Leiterbahn 33 gegenüber der zweiten Gegenelektrode 3 ist zwischen der Leiterbahn 33 und den Oberflächen der zweiten Gegenelektrode 3, über die die Leiterbahn 33 verläuft, eine Isolationsschicht 35 vorgesehen.

Der elektrische Anschluss der beiden Gegenelektroden 1, 3 erfolgt vorzugsweise über unmittelbar auf die jeweilige Gegenelektrode 1 bzw. 3 aufgebrachte Anschlüsse 37, 39.

Die Elektrode und die beiden Gegenelektroden 1, 3 werden an eine hier nicht dargestellte Messschaltung angeschlossen, die anhand der Kapazität C1 des durch die Elektrode und die erste Gegenelektrode 1 gebildeten ersten Kondensators und/oder der Kapazität C3 des durch die Elektrode und die zweite Gegenelektrode 3 gebildeten zweiten Kondensators den auf die Messmembran 15 einwirkenden Differenzdruck Δp bestimmt. Hierzu kann der Kapazität C1, C3 des ersten und/oder des zweiten Kondensators anhand einer in einem Kalibrationsverfahren ermittelten Kennlinie des Differenzdrucksensors unmittelbar ein Differenzdruckmesswert zugeordnet werden. Alternativ kann anhand der ersten und der zweiten Kapazität die differentielle Änderung f der beiden Kapazitäten C1, C3 gemäß f = (C1-C2)/C1+C2) bestimmt werden, der dann anhand einer in einem Kalibrationsverfahren ermittelten Kennlinie des Differenzdrucksensors ein Differenzdruckmesswert zugeordnet wird.

Zusätzlich kann mittels der Messschaltung eine Kapazität C_{S} eines durch die beiden Gegenelektroden 1, 3 gebildeten Kondensators bestimmt werden. Diese Kapazität C_{S} ist abhängig vom Abstand der beiden Gegenelektroden 1, 3 zueinander, und kann somit als Maß für einen auf beide Seiten des Differenzdrucksensors gleichermaßen einwirkenden Systemdruck p_{S} herangezogen werden. Der auf beide Seiten des Differenzdrucksensor gleichermaßen einwirkende Systemdruck p_{S} bewirkt eine Kompression des Differenzdrucksensors in axialer Richtung- d.h. parallel zur Flächennormalen auf die Messmembran 15 - durch die sich der Abstand der beiden Gegenelektroden 1, 3 voneinander verändert.

Der auf diese Weise gemessene Systemdruck p_{S} kann z.B. zur Kompensation eines vom Systemdruck p_{S} abhängigen Messfehlers der Differenzdruckmessung herangezogen werden.

Der erste und der zweite Kondensator besteht jeweils aus einem inneren Teilkondensator, dessen Kondensatorflächen der Fläche der Messmembran 15 entsprechen, und einem diesen außenseitlich umgebenden äußeren Teilkondensator. Im Unterschied zu einem analog aufgebauten Differenzdrucksensor ohne Graben in der Scheibe 5 sind die Kondensatorflächen der äußeren Teilkondensatoren durch den Graben 17 nach außen begrenzt. Die Kondensatorflächen der äußeren Teilkondensatoren umfassen ausschließlich die durch die Fläche des äußeren Randbereichs 23 des inneren Bereichs 19 der Scheibe 5 und die Fläche des stegförmigen Anschlussbereichs 27 gegebenen Kondensatorflächen. Die Erfindung bietet den Vorteil, dass die Fläche des Grabens 17 und die Fläche des gesamten äußeren Bereichs 21 der Scheibe 5 aufgrund des Grabens 17 nicht zur Kondensatorfläche der äußeren Teilkondensatoren beitragen.

Da die Kapazität eines Kondensators proportional zu dessen Kondensatorfläche ansteigt, ist die messtechnisch zu erfassende von der differenzdruckabhängigen Durchbiegung der Messmembran 15 abhängige Kapazitätsänderung ΔC1a bzw. ΔC3a im Vergleich zu der durch die Summe der Teilkapazitäten gegebenen gemessenen Kapazitäten
C1 = C1a + C1b bzw. C3 = C3a + C3b bei dem erfindungsgemäßen Differenzdrucksensor deutlich größer, als das bei einem Differenzdrucksensor ohne Graben 17 der Fall wäre.

Durch die Erfindung ist es somit möglich, mit Differenzdrucksensoren mit nur aus einer einzigen, als Gegenelektrode dienenden Schicht bestehenden Grundkörpern eine ausreichende Messgenauigkeit zu erzielen.

Da der äußere Bereich 21 der Scheibe 5 nicht zur Kapazität der äußeren Teilkondensatoren beiträgt, ist die Geometrie der Grundfläche des erfindungsgemäßen Differenzdrucksensors frei wählbar. Entsprechend kann der Differenzdrucksensor einen im Hinblick auf dessen kostengünstige Herstellung im Waferverband vorteilhafte quadratische Grundfläche aufweisen, ohne dass hierdurch Nachteile in Bezug auf die erzielbare Messgenauigkeit entstehen.

Die Herstellung der erfindungsgemäßen Differenzdrucksensoren erfolgt vorzugsweise anhand des nachfolgend anhand von Fig. 2 beschriebenen Verfahrens. Während zur Herstellung von Differenzdrucksensoren mit in mehrschichtigen Grundkörpern integrierten Gegenelektroden regelmäßig mindestens drei teure SOI-Wafer benötigt werden, wird zur Herstellung der erfindungsgemäßen Differenzdrucksensoren lediglich ein einziger SOI-Wafer 41, sowie ein erster und ein zweiter Siliziumwafer 43, 45 benötigt. Der SOI-Wafer 41 weist eine Trägerschicht T_{Si} aus Silizium, eine auf der Trägerschicht T_{Si} angeordnete Isolationsschicht I_{SiO2}, insb. eine Siliziumoxidschicht, und eine auf der Isolationsschicht I_{SiO2} angeordnete Deckschicht D_{Si} aus Silizium auf. Der erste und der zweite Siliziumwafer 43, 45 umfassen jeweils eine Trägerschicht T_{Si} aus Silizium, und eine auf der Trägerschicht T_{Si} aufgebrachte Isolationsschicht I_{SiO2}, insb. eine Siliziumoxidschicht. Das Aufbringen der jeweiligen Isolationsschicht I_{SiO2} erfolgt z.B. in einem Oxidationsprozess, z.B. einem Nass- oder Feuchtoxidprozess.

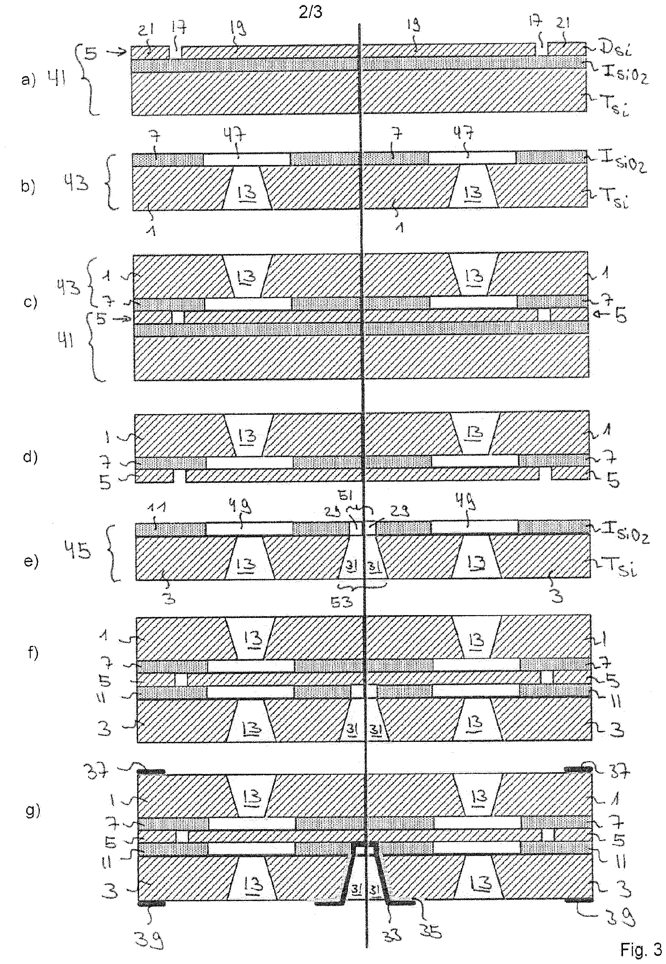

Das Verfahren wird vorzugsweise für eine Vielzahl von Differenzdrucksensoren im Waferverband ausgeführt. Fig. 3 zeigt das Verfahren exemplarisch am Beispiel von zwei im Waferverband gefertigten Differenzdrucksensoren, das zur parallelen Fertigung größerer vorzugsweise gerader Anzahlen von Differenzdrucksensoren entsprechend erweitert werden kann. Dabei werden die Differenzdrucksensoren vorzugsweise paarweise derart nebeneinander gefertigt, dass die Anschlussbereiche 27 der beiden Differenzdrucksensoren jeden Paares aneinander angrenzen, und die beiden Differenzdrucksensoren spiegelsymmetrisch zu einer zwischen den beiden Anschlussbereichen 27 verlaufenden Trennlinie aufgebaut werden, entlang derer der Verband beim abschließenden Vereinzeln der Differenzdrucksensoren getrennt wird. Die Trennlinie ist in Fig. 2 als durchgängige durch alle Verfahrensschritte a) - g) durchgezogene Linie eingezeichnet.

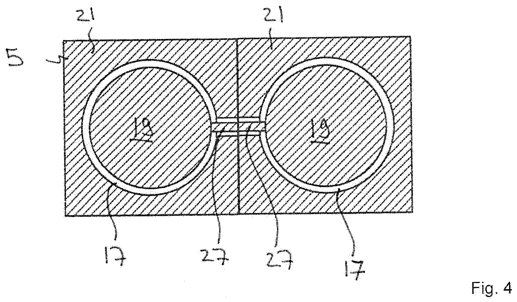

Die Deckschicht D_{Si} des SOI-Wafers 41 bildet die Scheiben 5 der Differenzdrucksensoren. Entsprechend werden in Verfahrensschritt a) die Gräben 17 in die Deckschicht D_{Si} des SOI-Wafers 41 eingebracht, durch die die einzelnen Scheiben 5 jeweils in den inneren Bereich 19 und den äußeren Bereich 21 unterteilt werden. Aufgrund der paarweisen Fertigung bilden die Gräben 17 von zwei Differenzdrucksensoren eines jeden Paares in der Draufsicht eine symmetrisch zur Trennlinie verlaufende geschlossene hantelförmige Linie. Fig. 4 zeigt hierzu eine Draufsicht auf die gemäß Verfahrensschritt a) präparierte Deckschicht D_{Soi} des SOI-Wafers 41. Zur Herstellung der Gräben 17 wird vorzugsweise ein Ätzverfahren, wie z.B. das unter der englischen Bezeichnung 'deep reactive ion etching (DRIE)' bekannte reaktive Ionentiefenätzen, eingesetzt.

Parallel oder nachfolgend dazu werden in Verfahrensschritt b) aus der Isolationsschicht I_{SiO2} des ersten Siliziumwafers 43 die ersten isolierenden Schichten 7, und aus dessen Trägerschicht T_{Si} die ersten Gegenelektroden 1 gefertigt. Hierzu wird eine Strukturierung der Isolationsschicht I_{SiO2} des ersten Siliziumwafers 43 vorgenommen, durch die außenseitlich jeweils von einem verbleibenden die erste isolierende Schicht 7 bildenden Rand der Isolationsschicht I_{SiO2} umgebene hier kreisscheibenförmige Bereiche 47 der Isolationsschicht I_{SiO2} entfernt werden. Zur Veranschaulichung ist das Bezugszeichen des zu entfernenden Bereichs 47 in Fig. 2 b) eingezeichnet. Zur Entfernung wird vorzugsweise ein mit gepufferter Flusssäure (buffered hydrofluoric acid (BHF)) ausgeführtes Ätzverfahren eingesetzt. Zusätzlich werden die Ausnehmungen 13 der ersten Gegenelektroden 1 bildende Gruben in die Trägerschicht T_{Si} des ersten Siliziumwafers 43 eingebracht, vorzugsweise eingeätzt. Hierzu eignet sich das Verfahren des reaktiven Ionentiefenätzens (DRIE). Alternativ kann die Ätzung mittels Kaliumhydroxid (KOH) vorgenommen werden.

Im nachfolgenden Verfahrensschritt c) wird der gemäß Verfahrensschritt a) bearbeitete SOI-Wafer 41 mit dem gemäß Verfahrensschritt b) bearbeiteten ersten Siliziumwafer 43 druckdicht verbunden. Hierzu wird der erste Siliziumwafer 43 derart auf den SOI-Wafer 41 aufgelegt, dass die Isolationsschicht I_{SiO2} des ersten Siliziumwafers 43 auf der Deckschicht D_{Si} des SOI-Wafers 41 aufliegt, und sich die Ausnehmungen 13 mittig über den die Messmembran 15 bildenden Teilbereichen der inneren Bereiche 19 befinden. Die druckdichte Verbindung zwischen der Isolationsschicht I_{SiO2} des ersten Siliziumwafers 43 und der Deckschicht D_{Si} des SOI-Wafers 41 wird vorzugsweise mittels Silizium-Fusions-Bonden bewirkt.

Anschließend wird in Verfahrensschritt d) die Trägerschicht T_{Si} des SOI-Wafers 41 und die durch das Entfernen der Trägerschicht T_{Si} frei gelegte Isolationsschicht I_{SiO2} des SOI-Wafers 41 entfernt.

Das Entfernen der Trägerschicht T_{Si} kann rein mechanisch durch Abschleifen erfolgen. Vorzugsweise wird zum Entfernen der Trägerschicht T_{Si} ein Ätzverfahren, wie z.B. das reaktive Ionentiefenätzen (DRIE) oder eine mittels Kaliumhydroxid (KOH) ausgeführte Ätzung eingesetzt. Zur Entfernung der Isolationsschicht I_{SiO2} wird vorzugsweise ein mit gepufferter Flusssäure (buffered hydrofluoric acid (BHF)) ausgeführtes Ätzverfahren eingesetzt. Alternativ kann hierzu auch das reaktive lonenätzverfahren, oder das reaktive lonentiefenätzverfahren, eingesetzt werden.

Parallel oder nachfolgend dazu werden in Verfahrensschritt e) aus der Isolationsschicht I_{SiO2} des zweiten Siliziumwafers 45 die zweiten isolierenden Schichten 11, und aus dessen Trägerschicht T_{Si} die zweiten Gegenelektroden 3 gefertigt.

Hierzu wird eine Strukturierung der Isolationsschicht I_{SiO2} des zweiten Siliziumwafers 45 vorgenommen, durch die außenseitlich jeweils von einem verbleibenden die zweite isolierende Schicht 11 bildenden Rand der Isolationsschicht I_{SiO2} umgebene hier kreisscheibenförmige Bereiche 49 der Isolationsschicht I_{SiO2} entfernt werden. Zur Veranschaulichung ist das Bezugszeichen des zu entfernenden Bereichs 49 in Fig. 2 d) eingezeichnet. Die Bereiche 49 sind formgleich zu den in Verfahrensschritt b) in der Isolationsschicht I_{SiO2} der ersten Siliziumwafers 43 entfernten Bereichen 47. Im gleichen Arbeitsgang werden die im Differenzdrucksensor die Anschlussbereiche 27 zumindest teilweise freilegengen Aussparungen 29 der zweiten isolierenden Schichten 11 erzeugt. Da die Anschlussbereiche 27 von zwei Differenzdrucksensoren eines Paares aneinander angrenzen, grenzen auch die zugehörigen beiden Aussparungen 29 aneinander an. Das bietet den Vorteil, dass jeweils zwei aneinander angrenzende Aussparungen 29 durch die Entfernung eines einzigen zusammenhängenden Bereichs 51 gefertigt werden können.

Zur Entfernung der Bereiche 49, 51 wird vorzugsweise ein mit gepufferter Flusssäure (buffered hydrofluoric acid (BHF)) ausgeführtes Ätzverfahren eingesetzt.

Nachfolgend werden die Ausnehmungen 13 der zweiten Gegenelektroden 3 bildende Gruben in die Trägerschicht T_{Si} des zweiten Siliziumwafers 45 eingebracht, vorzugsweise eingeätzt. Im gleichen Arbeitsgang werden die Aussparungen 31 der zweiten Gegenelektroden 3 gefertigt. Da die Anschlussbereiche 27 von zwei Differenzdrucksensoren eines Paares aneinander angrenzen, grenzen auch die zugehörigen diese zugänglich machenden Aussparungen 31 in den zugehörigen Gegenelektroden 3 aneinander an. Das bietet den Vorteil, dass jeweils zwei aneinander angrenzende Aussparungen 31 durch das Einbringen einer einzigen Grube 53 gefertigt werden können. Zur Einbringung der die Ausnehmungen 13 bildenden Gruben, sowie der jeweils zwei Aussparungen 31 bildenden Gruben 53 eignet sich das Verfahren des reaktiven lonentiefenätzens. Alternativ kann die Ätzung mittels Kaliumhydroxid (KOH) vorgenommen werden.

In Verfahrensschritt f) wird der auf diese Weise bearbeitet zweite Siliziumwafer 45 derart mit der Deckschicht D_{Si} des SOI-Wafers 41 des in Verfahrensschritt d) vorbereiteten Verbunds druckdicht verbunden, dass die die Ausnehmungen 13 bildenden Gruben der beiden Siliziumwafer 43, 45 zu beiden Seiten der Scheibe 5 gegenüberliegen, und sich die jeweils zwei Aussparungen 31 bildenden Gruben 53 unter den zugehörigen Anschlussbereichen 27 befinden. Auch diese druckdichte Verbindung wird vorzugsweise mittels Silizium-Fusions-Bonden bewirkt.

Abschließend werden in Verfahrensschritt g) die Leiterbahnen 33 und die Anschlüsse 37, 39 aufgebracht, und die im Waferverband hergestellten Differenzdrucksensoren durch Sägen vereinzelt.

Hierzu wird auf den Bereichen der die Aussparungen 31 begrenzenden Mantelflächen und den Bereichen der Rückseiten der zweiten Gegenelektroden 3, über die die Leiterbahnen 33 verlaufen werden, jeweils die Isolierschicht 35 aufgebracht. Auf die frei liegenden Anschlussbereiche 27 und die jeweils daran angrenzende innere Mantelfläche der Aussparung 29 der zweiten isolierenden Schicht 11 werden die Leiterbahnen 33 unmittelbar ohne Zwischenfügung einer Isolierschicht aufgebracht.

Genauso werden auch die Anschlüsse 37, 39 der ersten und zweiten Gegenelektroden 1,3 unmittelbar auf die entsprechenden Stellen auf den Rückseiten der ersten und zweiten Gegenelektroden 1, 3 aufgebacht.

Die Leiterbahnen 33 und die Anschlüsse 37, 39 sind hierzu vorzugsweise als Metallisierungen ausgebildet, die z.B. durch Sputtern aufgebracht werden. Sie bestehen z.B. aus Aluminium. Alternativ können unter Zwischenfügung von Haftvermittlern auch Metallisierungen aus Gold, Titan oder Platin eingesetzt werden.
- 1: erste Gegenelektrode
- 3: zweite Gegenelektrode
- 5: Scheibe
- 7: erste isolierende Schicht
- 9: Druckkammer
- 11: zweite isolierende Schicht
- 13: Ausnehmung
- 15: Messmembran
- 17: Graben
- 19: innerer Bereich
- 21: äußerer Bereich
- 23: Randbereich des inneren Bereichs
- 25: innerer Rand der isolierenden Schicht
- 27: Anschlussbereich
- 29: Aussparung
- 31: Aussparung
- 33: Leiterbahn
- 35: Isolationsschicht
- 37: Anschluss
- 39: Anschluss
- 41: SOI-Wafer
- 43: erster Siliziumwafer
- 45: zweiter Siliziumwafer
- 47: Bereich
- 49: Bereich
- 51: Bereich
- 53: Grube

## Patentansprüche

1. Differenzdrucksensor, mit
- einer ersten und einer zweiten Gegenelektrode (1, 3),
- einer zwischen den beiden Gegenelektroden (1, 3) angeordneten leitfähigen Scheibe (5),
- einer ersten isolierenden Schicht (7), über die ein äußerer Rand der Scheibe (5) unter Bildung einer ersten Druckkammer (9) mit einem äußeren Rand der ersten Gegenelektrode (1) verbunden ist,
- einer zweiten isolierenden Schicht (11), über die ein äußerer Rand der Scheibe (5) unter Bildung einer zweiten Druckkammer (9) mit einem äußeren Rand zweiten Gegenelektrode (3) verbunden ist,
- einer in der ersten Gegenelektrode (1) vorgesehenen Ausnehmung (13), über die die erste Druckkammer (9) mit einem ersten Druck (p₁) beaufschlagbar ist, und
- einer in der zweiten Gegenelektrode (3) vorgesehenen Ausnehmung (13), über die die zweite Druckkammer (9) mit einem zweiten Druck (p₂) beaufschlagbar ist,
**dadurch gekennzeichnet, dass**
- die Scheibe (5) durch einen Graben (17) in einen als Elektrode dienenden inneren Bereich (19) und einen davon durch den Graben (17) elektrisch isolierten äußeren Bereich (21) unterteilt ist,
- der inneren Bereich (19) eine zwischen den beiden Druckkammern (9) angeordnete Messmembran (15) und einen die Messmembran (15) umgebenden, zwischen den inneren Rändern (25) der beiden isolierenden Schichten (7, 11) eingespannten Randbereich (23) umfasst, und
- der innere Bereich (19) mit jeder der Gegenelektroden (1, 3) jeweils einen Kondensator mit einer von einem auf die Messmembran (15) einwirkenden Differenzdruck (Δp) zwischen dem ersten und dem zweiten Druck (p₁, p₂) abhängigen Kapazität (C1, C3) bildet, wobei die Kondensatoren jeweils aus einem inneren Teilkondensator, dessen Kondensatorflächen der Fläche des Messmembran (15) entsprechen, und einem den inneren Teilkondensator außenseitlich umgebenden äußeren Teilkondensator bestehen, und wobei die Fläche des Grabens (17) und die Fläche des gesamten äußeren Bereichs (21) der Scheibe (5) aufgrund des Grabens (17) nicht zur Kondensatorfläche der äußeren Teilkondensatoren beitragen.

2. Differenzdrucksensor nach Anspruch 1, **dadurch gekennzeichnet, dass** der innere Bereich (19) einen sich zum Rand der Scheibe (5) erstreckenden, insb. stegförmigen, Anschlussbereich (27) umfasst.

3. Differenzdrucksensor nach Anspruch 2, **dadurch gekennzeichnet, dass**
- die zwischen der Scheibe (5) und der zweiten Gegenelektrode (3) angeordnete isolierende Schicht (11) eine zumindest einen Teilbereich des Anschlussbereichs (27) frei legende Aussparung (29) aufweist,
- die zweite Gegenelektrode (3) eine in der Aussparung (29) der isolierenden Schicht (11) mündende Aussparung (31) aufweist, und
- ein elektrischer Anschluss des als Elektrode dienenden inneren Bereichs (19) durch die Aussparung (31) in der Gegenelektrode (3) und die Aussparung (29) in der zweiten isolierenden Schicht (11) hindurch erfolgt.

4. Differenzdrucksensor nach Anspruch 3, **dadurch gekennzeichnet, dass** der Anschluss des inneren Bereichs (19) über eine Leiterbahn (33), insb. eine durch Aufsputtern einer Metallisierung aufgebrachte Leiterbahn (33), erfolgt, die vom Anschlussbereich (27) entlang einer Mantelfläche der zweiten isolierenden Schicht (11) und einer Mantelfläche der zweiten Gegenelektrode (3) zu einer von der Scheibe (5) abgewandte Rückseite der zweiten Gegenelektrode (3) verläuft, wobei zwischen der Leiterbahn (33) und den Oberflächen der zweiten Gegenelektrode (3), auf denen die Leiterbahn (33) verläuft, eine Isolationsschicht (35) vorgesehen ist.

5. Differenzdrucksensor nach Anspruch 1, **dadurch gekennzeichnet, dass** der Graben (17) eine Grabenbreite größer gleich 5 µm aufweist.

6. Differenzdrucksensor nach Anspruch 5, **dadurch gekennzeichnet, dass** der Graben (17) eine Grabenbreite aufweist, die größer gleich einem Viertel einer Dicke der Scheibe (5) ist.

7. Differenzdrucksensor nach Anspruch 1, **dadurch gekennzeichnet, dass** der zwischen den inneren Rändern (25) der beiden isolierenden Schichten (7, 11) eingespannte Randbereich (23) des inneren Bereichs (19) eine Breite aufweist, die größer gleich 500 µm ist.

8. Differenzdrucksensor nach Anspruch 1, **dadurch gekennzeichnet, dass** auf der ersten und der zweiten Gegenelektrode (1, 3) jeweils ein Anschluss (37, 39) aufgebracht, insb. als Metallisierung aufgesputtert, ist, über den die jeweilige Gegenelektrode (1, 3) elektrisch anschließbar ist.

9. Differenzdrucksensor nach Anspruch 1, **dadurch gekennzeichnet, dass**
- die erste und die zweite Gegenelektrode (1, 3) einteilig sind, und insb. aus Silizium bestehen,
- die Scheibe (5) eine Siliziumscheibe, insb. eine aus einer Deckschicht (D_{Si}) eines SOI-Wafers (41) gefertigte Siliziumscheibe, ist, und
- die erste und die zweite isolierende Schicht (7, 11) jeweils eine Siliziumoxidschicht ist.

10. Verfahren zum Betrieb eines Differenzdrucksensor gemäß einem der vorangehenden Ansprüche, **dadurch gekennzeichnet, dass**
- anhand einer Kapazität (C1) des durch den als Elektrode dienenden inneren Bereich (19) der Scheibe (5) und die erste Gegenelektrode (1) gebildeten ersten Kondensators und/oder des durch den als Elektrode dienenden inneren Bereich (19) der Scheibe (5) und die zweite Gegenelektrode (3) gebildeten zweiten Kondensators der auf die Messmembran (15) einwirkende Differenzdruck (Δp) bestimmt wird, und/oder
- anhand einer Kapaziät (C_{S}) eines durch die erste und die zweite Gegenelektrode (1, 3) gebildeten Kondensators ein Maß für einen auf beide Seiten des Differenzdrucksensors gleichermaßen einwirkenden Systemdruck (p_{S}) bestimmt wird.

11. Verfahren zur Herstellung eines Differenzdrucksensors gemäß mindestens einem der Ansprüche 1 bis 9, insb. im Waferband zur parallelen Herstellung mehrerer baugleicher Differenzdrucksensoren ausführbares Verfahren, **dadurch gekennzeichnet, dass**
- der Graben (17) in eine die Scheibe (5) bildendende Deckschicht (D_{Si}) eines SOI-Wafers (41) eingebracht, insb. durch reaktives Ionentiefenätzen (DRIE) eingeätzt, wird,
- aus einer auf einer Trägerschicht (T_{Si}) eines ersten Siliziumwafers (43) aufgebrachten Isolationssicht (I_{SiO2}) die erste isolierende Schicht (7) gefertigt wird, wobei ein außenseitlich von einem verbleibenden, die erste isolierende Schicht (7) bildenden Rand der Isolationssicht (I_{SiO2}) umgebener Bereich (47) der Isolationssicht (I_{SiO2}) entfernt, insb. durch ein mit gepufferter Flusssäure (BHF) ausgeführtes Ätzverfahren weggeätzt, wird,
- die erste Gegenelektrode (1) aus der Trägerschicht (T_{Si}) des ersten Siliziumwafers (43) gefertigt wird, indem eine die Ausnehmung (13) der ersten Gegenelektrode (1) bildende Grube in die Trägerschicht (T_{Si}) eingebracht, insb. mittels reaktivem Ionentiefenätzen (DRIE) oder einem mit Kaliumhydroxid (KOH) ausgeführten Ätzverfahren eingeätzt, wird,
- die Isolationsschicht (I_{SiO2}) des ersten Siliziumwafers (43) derart mit der Deckschicht (D_{Si}) des SOI-Wafers (41) verbunden, insb. mittels Silizium-Fusions Bonden verbunden, wird, dass sich die Ausnehmung (13) der ersten Gegenelektrode (1) über der Messmembran (15) befindet,
- die Deckschicht (D_{Si}) des SOI-Wafers (41) frei gelegt wird, in dem die Trägerschicht (T_{Si}) des SOI-Wafers entfernt, insb. mittels reaktivem Ionentiefenätzen (DRIE) oder einem mit Kaliumhydroxid (KOH) ausgeführten Ätzverfahren weggeätzt, und eine dadurch freigelegte Isolationsschicht (I_{SiO2}) des SOI-Wafers enfternt, insb. durch ein mit gepufferter Flusssäure (BHF) ausgeführtes Ätzverfahren, durch ein reaktives lonenätzverfahren (RIE) oder durch ein reaktives Ionentiefenätzverfahren (DRIE) weggeätzt, wird,
- aus einer auf einer Trägerschicht (T_{Si}) eines zweiten Siliziumwafers (45) aufgebrachten Isolationssicht (I_{SiO2}) die zweite isolierende Schicht (11) gefertigt wird, wobei ein außenseitlich von einem verbleibenden, die zweite isolierende Schicht (11) bildenden Rand der Isolationssicht (I_{SiO2}) umgebener Bereich (49) der Isolationssicht (I_{SiO2}) entfernt, insb. durch ein mit gepufferter Flusssäure (BHF) ausgeführtes Ätzverfahren weggeätzt, wird,
- die zweite Gegenelektrode (3) aus der Trägerschicht (T_{Si}) des zweiten Siliziumwafers (45) gefertigt wird, indem eine die Ausnehmung (13) der zweiten Gegenelektrode (3) bildende Grube in die Trägerschicht (T_{Si}) eingebracht, insb. mittels reaktivem Ionentiefenätzen (DRIE) oder einem mit Kaliumhydroxid (KOH) ausgeführten Ätzverfahren eingeätzt, wird, und
- der zweite Siliziumwafer (45) derart mit der mit dem ersten Siliziumwafer (43) verbundenen Deckschicht (D_{Si}) des SOI-Wafers (41) verbunden, insb. durch Silizium-Fusions Bonden verbunden, wird, dass die sich die Aussparungen (13) der beiden Gegenelektroden (1, 3) zu beiden Seiten der Messmembran (5) gegenüberliegen.

12. Verfahren nach Anspruch 11, **dadurch gekennzeichnet, dass**
- der innere Bereich (19) den sich zum Rand der Scheibe (5) erstreckenden Anschlussbereich (27) umfasst,
- bei der Fertigung der zweiten isolierenden Schicht (11) eine zumindest einen Teilbereich des Anschlussbereichs (27) freilegende Aussparung (29) in der isolierenden Schicht (11) erzeugt wird, und
- bei der Fertigung der zweiten Gegenelektrode (3) eine in der Aussparung (29) in der isolierenden Schicht (11) mündende Aussparung (31) in der zweiten Gegenelektrode (3) erzeugt wird.

13. Verfahren nach Anspruch 11 und 12, **dadurch gekennzeichnet, dass** mehrere baugleiche Differenzdrucksensoren parallel im Waferverband gefertigt werden, wobei die Differenzdrucksensoren paarweise derart nebeneinander gefertigt werden, dass
- die Anschlussbereiche (27) der beiden Differenzdrucksensoren jeden Paares aneinander angrenzen,
- die Differenzdrucksensoren spiegelsymmetrisch zu einer zwischen den Anschlussbereichen (27) der Paare verlaufenden Trennlinie aufgebaut werden, entlang derer der Waferverband beim abschließenden Vereinzeln der Differenzdrucksensoren getrennt wird,
- die aneinander angrenzenden Aussparungen (29) in den zweiten isolierenden Schichten (11) jeden Paares durch die Entfernung eines einzigen zusammenhängenden Bereichs (51) der Isolationsschicht (I_{SiO2}) des zweiten Siliziumwafers (45) erzeugt werden, und
- die aneinander angrenzenden Aussparungen (31) in den zweiten Gegenelektroden (3) jeden Paares durch das Einbringen einer einzigen Grube (53) in die Trägerschicht (T_{Si}) des zweiten Siliziumwafers (45) erzeugt werden.

## Claims

1. Differential pressure sensor, with
- a first and a second counter-electrode (1, 3),
- a conductive disk (5), arranged between the two counter-electrodes (1, 3),
- a first isolating layer (7), via which an outer edge of the disk (5) is connected to an outer edge of the first counter-electrode (1), forming a first pressure chamber (9),
- a second isolating layer (11), via which an outer edge of the disk (5) is connected to an outer edge of the second counter-electrode (3), forming a second pressure chamber (9),
- a cavity (13) provided in the first counter-electrode (1), via which the first pressure chamber (9) can be subjected to a first pressure (p₁), and
- a cavity (13) provided in the second counter-electrode (3), via which the second pressure chamber (9) can be subjected to a second pressure (p₂),
**characterized**
**in that**
- the disk (5) is divided by a trench (17) into an interior zone (19) serving as an electrode and an exterior zone (21) which is electrically isolated from the interior zone by the trench (17),
- the interior zone (19) comprises a measuring diaphragm (15) arranged between the two pressure chambers (9) and a marginal zone (23) surrounding the measuring diaphragm (15), situated between the inner edges (25) of the two isolating layers (7, 11), and
- the interior zone (19) forms - with each of the counter-electrodes (1, 3) - a capacitor with a capacitance (C1, C3) that depends on a differential pressure (Δp) between the first and the second pressure (p₁, p₂), said differential pressure acting on the measuring diaphragm (15), wherein the capacitors are each formed by an inner partial capacitor whose capacitor surfaces correspond to the surface of the measuring diaphragm (15), and an outer partial capacitor that surrounds the inner partial capacitor on the outside, and wherein the surface of the trench (17) and the surface of the entire exterior zone (21) of the disk (5) do not contribute to the capacitor surface of the outer partial capacitors due to the trench (17).

2. Differential pressure sensor as claimed in Claim 1, **characterized in that** the interior zone (19) comprises a connection area (27), particularly in the form of a bar, which extends to the edge of the disk (5).

3. Differential pressure sensor as claimed in Claim 2, **characterized in that**
- the isolating layer (11) arranged between the disk (5) and the second counter-electrode (3) features a recess (29) which exposes at least a partial area of the connection area (27),
- the second counter-electrode (3) features a recess (31) which enters into the recess (29) of the isolating layer (11), and
- an electrical connection of the interior zone (19) serving as an electrode is implemented through the recess (31) present in the counter-electrode (3) and the recess (29) present in the second isolating layer (11).

4. Differential pressure sensor as claimed in Claim 3, **characterized in that** the connection of the interior zone (19) is implemented via a conductive track (33), particularly a conductive track deposited by the sputtering of a metal, said track extending from the connection area (27), along a lateral surface of the second isolating layer (11) and a lateral surface of the second counter-electrode (3) to a rear side of the second counter-electrode which faces away from the disk (5), wherein an isolation layer (35) is provided between the conductive track (33) and the surfaces of the second counter-electrode (3) on which the conductive track (33) extends.

5. Differential pressure sensor as claimed in Claim 1, **characterized in that** the trench (17) has a trench width greater than or equal to 5 µm.

6. Differential pressure sensor as claimed in Claim 5, **characterized in that** the trench (17) has a trench width greater than or equal to a quarter of a thickness of the disk (5).

7. Differential pressure sensor as claimed in Claim 1, **characterized in that** the marginal zone (23) of the interior zone (19) - said marginal zone being located between the inner edges (25) of the two isolating layers (7, 11) - has a width greater than or equal to 500 µm.

8. Differential pressure sensor as claimed in Claim 1, **characterized in that** a connection (37, 39) is applied on the first and the second counter-electrode (1, 3), particularly in the form of metallization implemented by means of sputtering, wherein by means of said connection the counter-electrode (1, 3) can be connected electrically.

9. Differential pressure sensor as claimed in Claim 1, **characterized in that**
- the first and the second counter-electrode (1, 3) are designed as a single piece, and are particularly made from silicon,
- the disk (5) is a silicon disk, particularly a silicon disk made from a cover layer (D_{Si}) of an SOI wafer (41), and
- the first and the second isolating layer (7, 11) are both a silicon oxide layer.

10. Procedure for the operation of a differential pressure sensor as claimed in one of the previous claims, **characterized in that**
- the differential pressure (Δp) acting on the measuring diaphragm (15) is determined using a capacitance (C1) of the first capacitor formed by the interior zone (19), serving as an electrode, of the disk (5) and the first counter-electrode (1), and/or the second capacitor formed by the interior zone (19), serving as an electrode, of the disk (5) and the second counter-electrode (3), and/or
- a value of a system pressure (ps) acting equally on both sides of the differential pressure sensor is determined using a capacitance (C_{S}) of a capacitor formed by the first and the second counter-electrode (1, 3).

11. Procedure for the fabrication of a differential pressure sensor as claimed in at least one of the Claims 1 to 9, particularly a procedure that can be executed in the wafer system for the parallel production of multiple differential pressure sensors of an identical design, **characterized in that**
- the trench (17) is introduced into a cover layer (D_{Si}) of an SOI wafer (41) forming the disk (5), said trench being particularly produced using deep reactive-ion etching (DRIE),
- the first isolating layer (7) is produced from an isolation layer (I_{SiO2}) applied on a substrate layer (T_{Si}) of a first silicon wafer (43), wherein an area (47) of the isolation layer (I_{SiO2}), surrounded on the outside by a remaining edge of the isolation layer (I_{SiO2}) forming the first isolating layer (7), is removed, particularly by an etching procedure performed with buffered hydrofluoric acid (BHF),
- the first counter-electrode (1) is made from the substrate layer (T_{Si}) of the first silicon wafer (43) by introducing a trench into the substrate layer (T_{Si}), said trench forming the recess (13) of the first counter-electrode (1), and being particularly etched using deep reactive-ion etching (DRIE) or an etching procedure performed with potassium hydroxide (KOH),
- the isolation layer (I_{SiO2}) of the first silicon wafer (43) is connected to the cover layer (D_{Si}) of the SOI wafer (41), particularly by means of silicon fusion bonding, in such a way that the recess (13) of the first counter-electrode (1) is situated above the measuring diaphragm (15),
- the cover layer (D_{Si}) of the SOI wafer (41) is exposed **in that** the substrate layer (T_{Si}) of the SOI wafer is removed, particularly etched away using deep reactive-ion etching (DRIE) or an etching procedure performed with potassium hydroxide (KOH), and an isolating layer (I_{SiO2}) of the SOI wafer exposed as a result is removed, particularly etched away using an etching procedure performed with buffered hydrofluoric acid (BHF), reactive-ion etching (RIE) or deep reactive-ion etching (DRIE),
- the second isolating layer (11) is fabricated from an isolation layer (I_{SiO2}) applied on a substrate layer (T_{Si}) of a second silicon wafer (45), wherein an area (49) of the isolation layer (I_{SiO2}), which is surrounded on the outside by a remaining edge of the isolation layer (I_{SiO2}) that forms the second isolating layer (11), is removed, particularly etched away using an etching procedure performed with buffered hydrofluoric acid (BHF),
- the second counter-electrode (3) is fabricated from the substrate layer (T_{Si}) of the second silicon wafer (45) by introducing a trench, forming the recess (13) of the second counter-electrode (3), into the substrate layer (T_{Si}), particularly etching said trench using deep reactive-ion etching (DRIE) or an etching procedure performed with potassium hydroxide, and
- the second silicon wafer (45) is connected to the cover layer (D_{Si}) of the SOI wafer (41), which is connected to the first silicon wafer (43), particularly connected by means of silicon fusion bonding, in such a way that the recesses (13) of the two counter-electrodes (1, 3) are located opposite one another on both sides of the measuring diaphragm (5).

12. Procedure as claimed in Claim 11, **characterized in that**
- the interior zone (19) comprises the connection area (27) extending as far as the edge of the disk (5),
- during the fabrication of the second isolating layer (11), a recess (29) exposing at least a partial area of the connection area (27) is produced in the isolating layer (11), and
- during the fabrication of the second counter-electrode (3), a recess (31) entering into the recess (29) in the isolating layer (11) is produced in the second counter-electrode (3).

13. Procedure as claimed in Claim 11 and 12, **characterized in that** multiple differential pressure sensors, which are identical in design, are manufactured in parallel in the wafer system, wherein said differential pressure sensors are manufactured in pairs beside one another in such a way that
- the connection zones (27) of the two differential pressure sensors of each pair are adjacent to one another,
- the differential pressure sensors are implemented in mirror symmetry in relation to a separation line extending between the connection zones (27) of the pairs along which the wafer system is separated during the final separation of the differential pressure sensors,
- the recesses (29), which are adjacent to one another, in the second isolating layers (11) of each pair are produced by the removal of a single continuous area (51) of the isolating layer (I_{SiO2}) of the second silicon wafer (45), and
- the recesses (31), which are adjacent to one another, in the second counter-electrodes (3) of each pair are produced by the introduction of a single trench (53) in the substrate layer (T_{Si}) of the second silicon wafer (45).

## Revendications

1. Capteur de pression différentielle, avec
- une première et une deuxième contre-électrode (1, 3),
- un disque conducteur (5), disposé entre les deux contre-électrodes (1, 3),
- une première couche isolante (7), par l'intermédiaire de laquelle un bord extérieur du disque (5) est relié avec un bord extérieur de la première contre-électrode (1) en formant une première chambre de pression (9),
- une deuxième couche isolante (11), par l'intermédiaire de laquelle un bord extérieur du disque (5) est relié avec un bord extérieur de la deuxième contre-électrode (3) en formant une deuxième chambre de pression (9),
- une cavité (13) prévue dans la première contre-électrode (1), par l'intermédiaire de laquelle la première chambre de pression (9) peut être soumise à une première pression (p₁), et
- une cavité (13) prévue dans la deuxième contre-électrode (3), par l'intermédiaire de laquelle la deuxième chambre de pression (9) peut être soumise à une deuxième pression (p₂),
**caractérisé**
**en ce que**
- le disque (5) est divisé par une tranchée (17) en une zone intérieure (19) servant d'électrode et en une zone extérieure (21) isolée électriquement de la zone intérieure par la tranchée (17),
- la zone intérieure (19) comprend une membrane de mesure (15) disposée entre les deux chambres de pression (9) et une zone marginale (23) entourant la membrane de mesure (15), située entre les bords intérieurs (25) des deux couches isolantes (7, 11), et
- la zone intérieure (19) forme avec chacune des contre-électrodes (1, 3) respectivement un condensateur avec une capacité (C1, C3) dépendant d'une pression différentielle (Δp) entre la première et la deuxième pression (p₁, p₂), laquelle pression différentielle agit sur la membrane de mesure (15), les condensateurs étant chacun constitués d'un condensateur partiel intérieur, dont les surfaces de condensateur correspondent à la surface de la membrane de mesure (15), et d'un condensateur partiel extérieur entourant à l'extérieur le condensateur partiel intérieur, la surface de la tranchée (17) et la surface de la zone extérieure (21) complète du disque (5) ne contribuant pas à la surface des condensateurs partiels extérieurs en raison de la tranchée (17).

2. Capteur de pression différentielle selon la revendication 1, **caractérisé en ce que** la zone intérieure (19) comprend une zone de raccordement (27), notamment en forme de nervure, qui s'étend jusqu'au bord du disque (5).

3. Capteur de pression différentielle selon la revendication 2, **caractérisé en ce que**
- la couche isolante (11) disposée entre le disque (5) et la deuxième contre-électrode (3) présente au moins un évidement exposant une zone partielle de la zone de raccordement (27),
- la deuxième contre-électrode (3) présente un évidement (31) débouchant dans l'évidement (29) de la couche isolante (11), et
- un raccordement électrique de la zone intérieure (19) servant d'électrode étant réalisé à travers l'évidement (31) présent dans la contre-électrode (3) et l'évidement (29) présent dans la deuxième couche isolante (11).

4. Capteur de pression différentielle selon la revendication 3, **caractérisé en ce que** le raccordement de la zone intérieure (19) s'effectue via une piste conductrice (33), notamment une piste conductrice appliquée par pulvérisation d'une métallisation, laquelle piste s'étend à partir de la zone de raccordement (27), le long d'une surface latérale de la deuxième couche isolante (11) et d'une surface latérale de la deuxième contre-électrode (3), une couche d'isolation (35) étant prévue entre la piste conductrice (33) et les surfaces de la deuxième contre-électrode (3), sur lesquelles s'étend la piste conductrice (33).

5. Capteur de pression différentielle selon la revendication 1, **caractérisé en ce que** la tranchée (17) présente une largeur supérieure ou égale à 5 µm.

6. Capteur de pression différentielle selon la revendication 5, **caractérisé en ce que** la tranchée (17) présente une largeur supérieure ou égale à un quart d'une épaisseur du disque (5).

7. Capteur de pression différentielle selon la revendication 1, **caractérisé en ce que** la zone marginale (23) - située entre les bords intérieurs (25) des deux couches isolantes (7, 11) - de la zone intérieure (19), présente une largeur supérieure ou égale à 500 µm.

8. Capteur de pression différentielle selon la revendication 1, **caractérisé en ce qu'**est placée, sur la première et la deuxième contre-électrode (1, 3), respectivement une connexion (37, 39), notamment sous forme de métallisation réalisée par pulvérisation, connexion par l'intermédiaire de laquelle la contre-électrode (1, 3) respective peut être raccordée électriquement.

9. Capteur de pression différentielle selon la revendication 1, **caractérisé en ce que**
- la première et la deuxième contre-électrode (1, 3) sont constituées d'une seule pièce, et notamment de silicium,
- le disque (5) est un disque en silicium, notamment un disque en silicium fabriqué à partir d'une couche supérieure (D_{Si}) d'une plaquette de SOI (41), et
- la première et la deuxième couche isolante (7, 11) sont une couche d'oxyde de silicium.

10. Procédé destiné à l'exploitation d'un capteur de pression différentielle selon l'une des revendications précédentes, **caractérisé en ce**
- **qu'**est déterminée - sur la base d'une capacité (C1) du premier condensateur formé par la zone intérieure (19), servant d'électrode, du disque (5) et la première contre-électrode (1), et/ou du deuxième condensateur formé par la zone intérieure (19), servant d'électrode, du disque (5) et la deuxième contre-électrode (3) - la pression différentielle (Δp) agissant sur la membrane de mesure (15), et/ou
- **qu'**est déterminée - sur la base d'une capacité (C_{S}) d'un condensateur formé par la première et la deuxième contre-électrode (1, 3) - une mesure d'une pression système (ps) agissant de manière égale des deux côtés du capteur de pression différentielle.

11. Procédé destiné à la fabrication d'un capteur de pression différentielle selon au moins l'une des revendications 1 à 9, notamment un procédé pour la fabrication en parallèle, à partir d'un réseau de plaquettes, de plusieurs capteurs de pression différentielle de conception identique, **caractérisé en ce que**
- la tranchée (17) est réalisée dans une couche supérieure (D_{Si}) d'une plaquette de SOI (41) formant le disque (5), laquelle tranchée est notamment obtenue au moyen d'une gravure profonde par ions réactifs (DRIE),
- la première couche isolante (7) est fabriquée à partir d'une couche d'isolation (I_{SiO2}) appliquée sur une couche support (T_{Si}) d'une première plaquette de silicium (43), une zone (47) de la couche d'isolation (I_{SiO2}), entourée à l'extérieur par un bord restant de la couche d'isolation (I_{SiO2}) formant la première couche isolante (7), étant enlevée de la couche d'isolation (I_{SiO2}), notamment au moyen d'un procédé de gravure à l'acide fluorhydrique tamponné (BHF),
- la première contre-électrode (1) est fabriquée à partir de la couche support (T_{Si}) de la première plaquette de silicium (43) **en ce qu'**est réalisée dans la couche support (T_{Si}) une tranchée formant l'évidement (13) de la première contre-électrode (1), notamment au moyen d'une gravure profonde par ions réactifs (DRIE) ou d'un procédé de gravure à l'hydroxyde de potassium (KOH),
- la couche d'isolation (I_{SiO2}) de la première plaquette de silicium (43) est reliée à la couche supérieure (D_{Si}) de la plaquette de SOI (41), notamment au moyen d'une liaison par fusion de silicium, de telle sorte que l'évidement (13) de la première contre-électrode (1) est situé au-dessus de la membrane (15) de mesure,
- la couche supérieure (D_{Si}) de la plaquette de SOI (41) est exposée **en ce que** la couche support (T_{Si}) de la plaquette de SOI est enlevée, notamment au moyen d'une gravure profonde par ions réactifs (DRIE) ou d'un procédé de gravure à l'hydroxyde de potassium (KOH), et une couche isolante (I_{SiO2}) de la plaquette de SOI ainsi exposée est enlevée, notamment au moyen d'un procédé de gravure à l'acide fluorhydrique tamponné (BHF), d'un procédé de gravure par ions réactifs (RIE) ou d'un procédé de gravure profonde par ions réactifs (DRIE),
- la deuxième couche isolante (11) est fabriquée à partir d'une couche d'isolation (I_{SiO2}) appliquée sur une couche support (T_{Si}) d'une deuxième plaquette de silicium (45), une zone (49) de la couche d'isolation (I_{SiO2}), laquelle zone est entourée à l'extérieur par un bord restant de la couche d'isolation (I_{SiO2}) formant la deuxième couche isolante (11), étant enlevée de la couche d'isolation (I_{SiO2}), notamment au moyen d'un procédé de gravure à l'acide fluorhydrique tamponné (BHF),
- la deuxième contre-électrode (3) est fabriquée à partir de la couche support (T_{Si}) de la deuxième plaquette de silicium (45) en réalisant une tranchée formant l'évidement (13) de la deuxième contre-électrode (3) dans la couche support (T_{Si}), notamment au moyen d'une gravure profonde par ions réactifs (DRIE) ou par un procédé de gravure à l'hydroxyde de potassium (KOH), et
- la deuxième plaque de silicium (45) est reliée avec la couche supérieure (D_{Si}) de la plaquette de SOI (41) avec la première plaquette de silicium (43), notamment reliée via une liaison par fusion de silicium, de telle sorte que les évidements (13) des deux contre-électrodes (1, 3) sont opposés l'un à l'autre des deux côtés de la membrane de mesure (5).

12. Procédé selon la revendication 11, **caractérisé en ce que**
- la zone intérieure (19) englobe la zone de raccordement (27) s'étendant jusqu'au bord du disque (5),
- lors de la fabrication de la deuxième couche isolante (11), un évidement (29) exposant au moins une zone partielle de la zone de raccordement (27) est généré dans la couche isolante (11), et
- lors de la fabrication de la deuxième contre-électrode (3), un évidement (31) débouchant dans l'évidement (29) réalisé dans la couche isolante (11) est généré dans la deuxième contre-électrode (3).

13. Procédé selon la revendication 11 et 12, **caractérisé en ce que** plusieurs capteurs de pression différentielle de conception identique sont fabriqués en parallèle à partir d'un réseau de plaquettes, les capteurs de pression différentielle étant fabriqués par paires les uns à côté des autres de telle manière que
- les zones de raccordement (27) des deux capteurs de pression différentielle de chaque paire sont adjacentes l'une à l'autre,
- les capteurs de pression différentielle sont réalisés en symétrie miroir pour former une ligne de séparation s'étendant entre les zones de raccordement (27) des paires, le long de laquelle le réseau de plaquettes est séparé lors de la séparation finale des capteurs de pression différentielle,
- les évidements adjacents (29) dans les deuxièmes couches isolantes (11) de chaque paire sont générés par l'enlèvement d'une seule zone continue (51) de la couche isolante (I_{SiO2}) de la deuxième plaquette de silicium (45), et
- les évidements adjacents (31) dans les deuxièmes contre-électrodes (3) de chaque paire sont générés par la réalisation d'une tranchée (53) unique dans la couche porteuse (T_{Si}) de la deuxième plaquette de silicium (45).
